Europäisches Patentamt

European Patent Office

Office européen des brevets

(11) Publication number: **0 320 299 B1**

# EUROPEAN PATENT SPECIFICATION

(45) Date of publication of patent specification: **02.03.94**

(51) Int. Cl.5: **G01L 9/04**, G01L 9/06

(21) Application number: **88311711.1**

(22) Date of filing: **09.12.88**

(54) **Pressure transducers and a method of measuring pressure.**

(30) Priority: **11.12.87 US 131873**

(43) Date of publication of application:
**14.06.89 Bulletin 89/24**

(45) Publication of the grant of the patent:
**02.03.94 Bulletin 94/09**

(84) Designated Contracting States:
**DE ES FR GB IT SE**

(56) References cited:
**US-A- 3 830 100**
**US-A- 4 217 783**
**US-A- 4 311 980**

**SENSORS AND ACTUATORS, vol. 15, no. 3,
November 1988, pages 257-261, Lausanne,
CH; P.J. FRENCH: "Polysilicon strain sensors
using shear piezoresistance"**

**MEASUREMENT TECHNIQUES, vol. 19, no. 7,
July 1976, pages 991-992, New York, US; S.P.
BORSHCHEVSKII et al.: "Method of design-
ing diaphragm-type tensoresistor pressure
transducers"**

(73) Proprietor: **INTERNATIONAL CONTROL AUTO-
MATION FINANCE S.A.**
**16 Rue des Bains**
**Ville de Luxembourg(LU)**

(72) Inventor: **Skuratovsky, Eugene**
**6576 Maplewood Drive/Apt. 203**
**Mayfield Heights Ohio 44124(US)**
Inventor: **Sturdevant, Michael L.**
**11351 Prouty Road**
**Concord Ohio 44077(US)**

(74) Representative: **Cotter, Ivan John et al**
**D. YOUNG & CO.**
**21 New Fetter Lane**
**London EC4A 1DA (GB)**

## Description

This invention relates to pressure transducers and to methods of measuring pressure.

Pressure transducers utilising flat diaphragms with strain gauges to measure pressure-induced deflections are well known: see US Patents Nos. US-A-3 341 794 (Stedman), US-A-3 456 226 (Vick) and US-A-3 505 634 (von Vick). In general, these transducers utilise flat metal or silicon diphragms with thin-film, bonded foil, or silicon type strain gauges on them. The strain gauges are placed on the diaphragm to respond to tensile, tangential strains at the centre and compressive, radial strains at the outer edge of the diaphragm.

Other pressure transducers are disclosed in US Patents Nos. US-A-4 311 980 (Prudenziati), US-A-4 586 018 (Bettman) and US-A-4 217 783 (Ito et al).

As shown in Figures 1 and 2 of the accompanying drawings, a previously proposed pressure transducer comprises a cylindrical ceramic diaphragm or disc 1 that carries a plurality of thick film resistors 2 positioned to respond to radial strains. Thick film resistors 3 are provided near the centre of the diaphragm 1 for responding to tangential strains. Figures 3 and 4 of the accompanying drawings show a previously proposed pressure transducer in which resistors 4 and 5 are positioned on a diaphragm 6. The resistors 4 and 5 are oriented so that the strain they are meant to measure is parallel to the resistors' longitudinal axes, as shown in Figure 4. The resulting resistors are limited in size to the size of the diaphragm. P shows the direction of applied pressure to the diaphragm.

The strain gauges are connected in a Wheatstone bridge configuration so that adjacent legs of the bridge sense strains of opposite sign, resulting in an additive effect to the transducer output. Recently, ceramic diaphragms with screen printed and fired thick film resistors have attracted interest as pressure transducers: see US-A-4 311 980 (Prudenziati) and "The Thick Film Strain Gage", Howard A. Nielsen, Jr ISA 32nd International Instrumentation Symposium, Paper Session 4.7, 8 May 1986. These ceramic/thick film transducers have been designed in a manner very similar to the transducers before them with the resistors arranged in a Wheatstone bridge configuration.

Thick film resistors are known to be susceptible to a problem known as "burst noise": see "Physical Model of Burst Noise in Thick Film Resistors", T.M. Chen and J.G. Cottle, Solid State Electronics, Vol. 29, No. 9, pp 865-872, 1986"; and "Characteristics, Sources and Minimization of Thick Film Resistor Burst Noise", J.G. Cottle and T.M. Chen, ISHM Proceedings of the International Symposium on Microelectronics, 1986, pp 835-839. This phenomenon can cause noise in the output signal of a ceramic/thick film pressure transducer with a magnitude greater than 0.15 % of span. Burst noise has been shown to be minimised by using thick film resistors of low resistivity and large size. In pressure transducer applications, it is desirable to have high resistance to minimise power consumption. The resistance of a thick film resistor is given by $R = \rho \, (l/wt)$, where R is the resistance, $\rho$ is the resistivity of the resistor compound, l is the length of the resistor, w is the width of the resistor, and t is the thickness of the resistor. To obtain high resistance, a high resistivity resistor compound or a large area resistor are required; that is, a long and narrow resistor is required. Since low noise and high resistance are desired, a lower resistivity thick film material must be used with a large area, that is a long and narrow resistor is needed.

Thick film resistors change resistence as a function of the average strain over the area of the resistor. To obtain maximum output, the resistors should be close to the centre or close to the outer edge of the diaphragm in order to maximise the average strain level experienced by the resistor. A large diaphragm is required to accommodate four long and narrow resistors in the previously used Wheatstone bridge configuration and to keep the average strains at the resistors high enough for good output. Since stresses in the diaphragm increase as a function of the square of the radius, large diaphragms have high stresses, which are undesirable. There is not enough room on a small diaphragm to locate a full bridge using long and narrow resistors required for good noise performance. A half or quarter bridge has a smaller output than desired.

In the previous proposals, there is not room on the diaphragm for this type of resistor unless the diaphragm is very large. As diaphragm size becomes larger, the stresses in the diaphragm increase as a function of the square of the radius. This is undesirable from a diaphragm strength standpoint.

In the previous proposals, the output of the thick film resistor has been due to the radial and tangential strains in the ceramic diaphragm in the directions parallel and perpendicular to the gauge axis. Thick film resistors to date have taken advantage of the gauge factor of the resistor in a direction parallel to the resistor axis and the gauge factor perpendicular to the resistor axis. The change in resistance for a thick film resistor experiencing a strain has been determined to date by:

$$\frac{dR}{R}\Big|_l = GF_l e_x \qquad \frac{dR}{R}\Big|_t = GF_t e_y$$

2

where $\frac{dR}{R}\big|_l$ is the resistance change caused by a strain parallel to the length of the resistor, $\frac{dR}{R}\big|_t$ is the resistance change caused by a strain perpendicular to the length of the gauge, $GF_t$ is the gauge factor of the resistor perpendicular to the length of the gauge, $GF_l$ is the gauge factor of the resistor parallel to the length of the gauge, $e_x$ is the strain parallel to the length of the gauge, and $e_y$ is the strain perpendicular to the length of the gauge. See J. Phys. D; Applied Physics, Vol. 12, 1979, pp L51-53 "Strain Sensitivity in Film and Cermet Resistors: Measured and Physical Quantities", Morten et al.; IEEE Transactions on Components, Hybrids and Manufacturing Technology, Vol. CHMT-3, No. 3, Sept. 1980, pp 421-423 "Strain Sensitivity in Thick Film Resistors", Canali et al; "Strain Sensitivity of Thick Film Resistors", J.S. Shah, IEEE Transactions on Compon. Hybrids and Manufacturing Technology, Vol. CHMT-3, No. 4, 1980, pp 410-420; "Changes in Thick Film Resistor Values Due to Substrate Flexure", P.J. Holmes, Microelectronics and Reliability, Vol. 12, 1973, pp 395; and "Strain Characteristics of Thick Film Resistors and Its Application to a Strain Sensor", Osamu Abe and Yoshiaki Taketa, IMC, 1986 Proceedings, 1986, pp 282-285.

US-A-4 311 980 (Prudenziati) describes a device for pressure measurement in which thick film resistors are formed on a diaphragm, the resistors being subjected to transverse and longitudinal strains. US-A-4 217 783 (Ito et al) describes the use of various configurations of strain-dependent resistance elements, including elongate versions.

According to a first aspect of the invention there is provided a pressure transducer comprising:

a diaphragm having opposed surfaces;

at least one thick film resistor on one of said diaphragm surfaces, the thick film resistor having known resistivity coefficients for strains in longitudinal, transverse and normal directions with respect to the thick film resistor; and

means for measuring a change in the resistance of said at least one thick film resistor upon the application of pressure to the diaphragm;

characterised in that:

the thick film resistor is elongate and has a known resistivity coefficient in the normal direction thereof;

the at least one thick film resistor has a surface area directly exposed to the pressure to be measured; and

the change in the total resistance of the at least one thick film resistor is related to said strains and to said known resistivity coefficients by the formula

$$\frac{dR}{R} = C_x\, e_x + C_y\, e_y + C_z\, e_z + e_x \cdot e_y \cdot e_z$$

where $C_x$, $C_y$ and $C_z$ are said resistivity coefficients, and $e_x$, $e_y$ and $e_z$ are said strains, in said longitudinal, transverse and normal directions.

According to a second aspect of the invention there is provided a method of measuring pressure utilising a diaphragm carrying at least one thick film resistor, the method comprising the steps of:

orienting the diaphragm so that the pressure is applied normal to the at least one thick film resistor; and

measuring any change in resistance of the at least one thick film resistor due to the applied pressure;

characterised in that:

the thick film resistor is elongate;

the at least one thick film resistor has a surface area directly exposed to the pressure to be measured; and

the change in resistance of the at least one thick film resistor has the relationship:

$$\frac{dR}{R} = C_x\, e_x + C_y\, e_y + C_z\, e_z + e_x \cdot e_y \cdot e_z$$

where $C_x$, $C_y$ and $C_z$ are resistivity coefficients for strains in the longitudinal, transverse and normal directions to the resistor and $e_x$, $e_y$ and $e_z$ are strains in the longitudinal, transverse and normal directions to the resistor.

Embodiments of the invention described hereinbelow take advantage of the significant normal strain sensitivity of thick film resistors to increase output, while maintaining good noise characteristics and low stresses in the diaphragm, which may be a ceramic diaphragm. The invention takes advantage of the normal direction sensitivity of the resistor to increase the output of the pressure transducer by exposing the resistor to the pressure to be measured.

One embodiment of the invention utilises a single resistor which is oriented radially at the centre of the diaphragm and exposed to the pressure to be measured. Bridge completion can be done externally or on a non-strained portion of the transducer. In this configuration, the measuring resistor measures the radial and tangential strains over the area of the resistor in addition to the normal strains due to the pressure. These strains can be calculated as follows:

$$e_x = \frac{1}{E_s} \left[ \frac{3P}{8h^2} \left( (1 - \nu^2) a^2 + (3\nu^2 - 3) x^2 \right) - \nu P \right]$$

$$e_y = \frac{1}{E_s} \left[ \frac{3P}{8h^2} \left( (1 - \nu^2) a^2 + (\nu^2 - 1) x^2 \right) - \nu P \right]$$

$$e_z = \frac{1}{E_r} \left[ P - \nu' \left( \frac{3P}{8h^2} \left( (1 + \nu') 2a^2 - (1 + \nu') 4 x^2 \right) \right) \right]$$

where $e_x$, $e_y$, and $e_z$ are the radial, tangential and normal strains, P is the applied pressure, $\nu$ and $\nu'$ are the Poisson's ratios of the substrate and resistor, respectively, a is the diaphragm radius, $E_r$ and $E_s$ are the Young's moduli of the resistor and the substrate, respectively, h is the diaphragm thickness, and x is the radius at which the resistor is located: see "Pressure Component Construction", John F. Harvey, Van Nostrand Reinhold, 1980.

An annular elongate thick film resistor can be used on the diaphragm, as can a plurality of thick film resistors extending substantially in the same direction on the diaphragm and including at least some annular parts.

The embodiments of the invention described below can be designed to provide pressure transducers which are simple in design, rugged in construction and economical to manufacture.

The invention will now be further described, by way of illustrative and non-limiting example, with reference to the accompanying drawings, in which like references designate like or corresponding parts throughout, and in which:

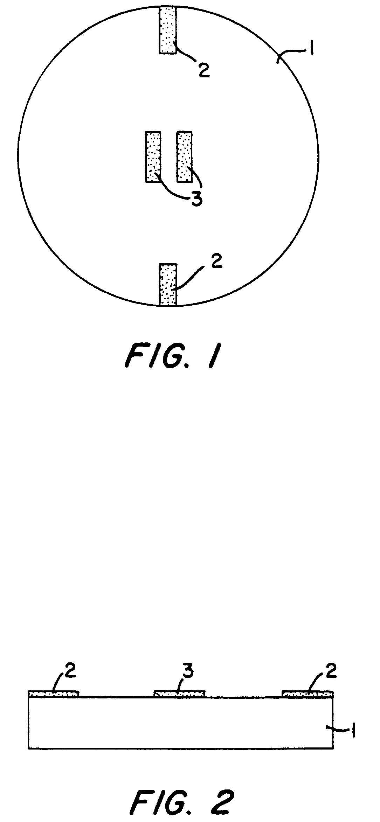

Figure 1 is a plan view of a previously proposed pressure transducer utilising a ceramic disc or diaphragm carrying thin film resistors;

Figure 2 is a side elevational view of Figure 1;

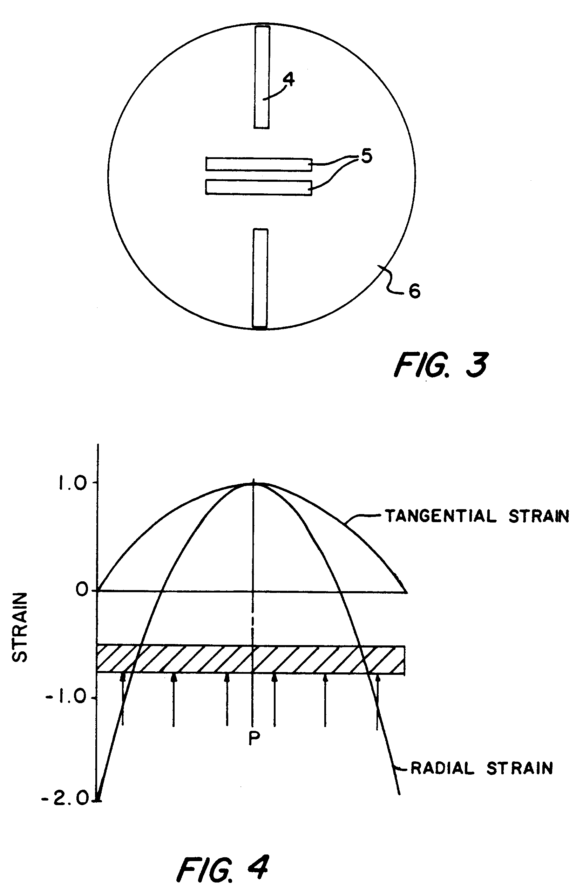

Figure 3 is a plan view of another previously proposed pressure transducer using thick film resistors carried on a disc or diaphragm;

Figure 4 is a diagrammatical side sectional view of Figure 3 showing the distribution of tangential and radial strain across the diaphragm;

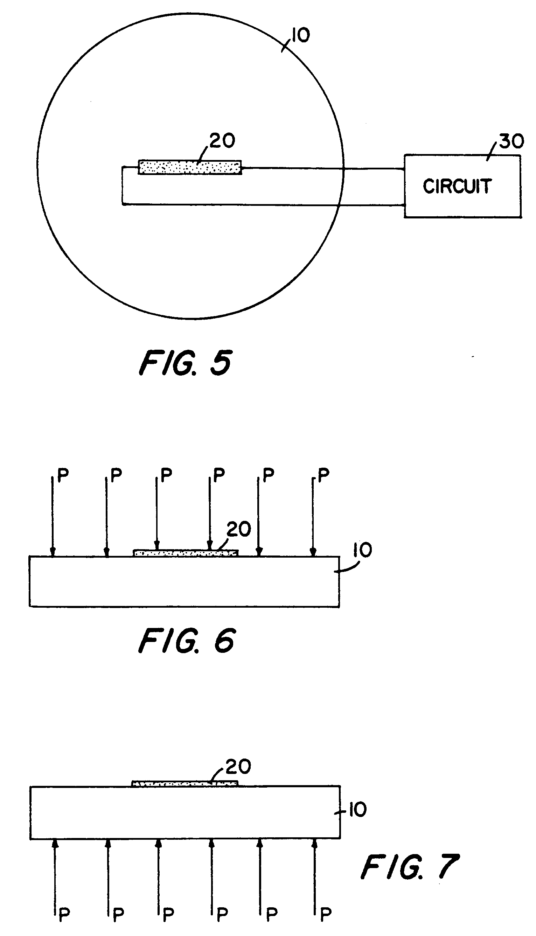

Figure 5 is a top plan view of a pressure transducer, in accordance with one embodiment of the invention, comprising a diaphragm carrying a thick film resistor;

Figure 6 is a side elevational view of Figure 5, showing the application of pressure on the side of the diaphragm carrying the thick film resistor;

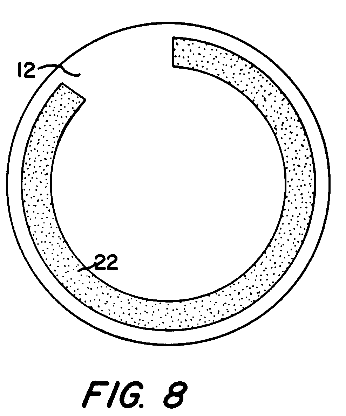

Figure 7 is a view similar to Figure 6, but not in accordance with the present invention and showing the application of pressure on the opposite side of the diaphragm;

Figure 8 is a plan view of a second embodiment of the invention;

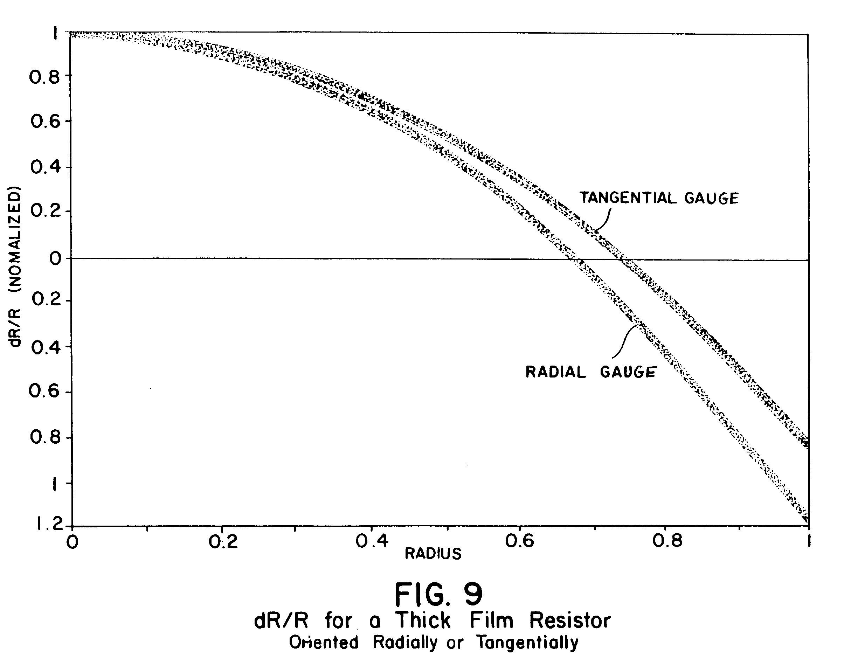

Figure 9 is a graph plotting the change in resistance against radius for tangential and for radial gauges in accordance with embodiments of the invention; and

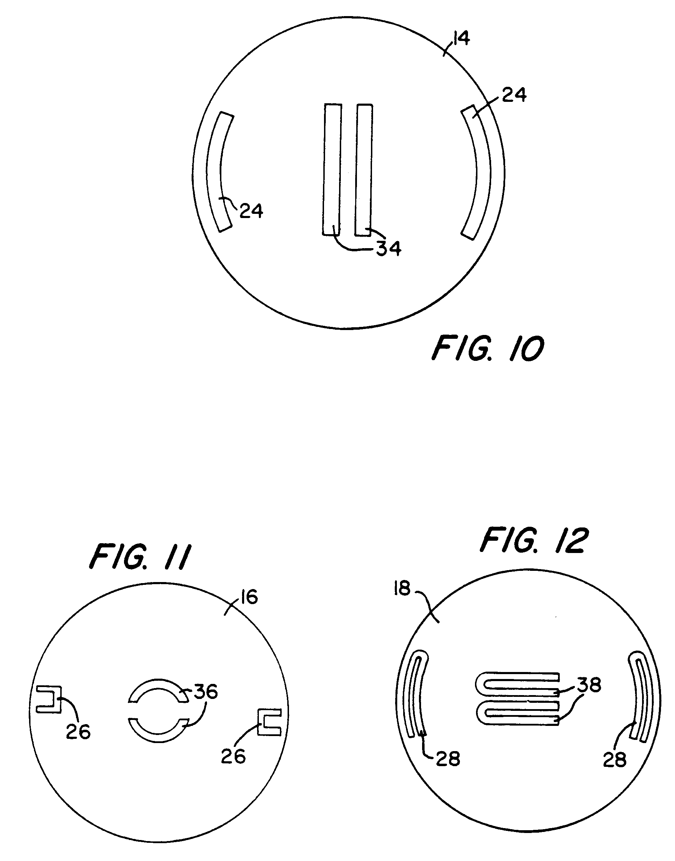

Figures 10, 11 and 12 are plan views of third, fourth and fifth embodiments of the invention, respectively.

Referring to the drawings, the invention embodied in Figures 5 and 6 comprises a pressure transducer having a disc-shaped diaphragm or substrate 10 with upper and lower surfaces. A thick film resistor 20 is deposited on one of the surfaces and is connected to a circuit, shown schematically at 30, for measuring changes in resistance of the thick film resistor.

The change in resistance dR/R is found for a given diaphragm and thick film resistor compound after measuring the above-mentioned resistivity coefficients $C_x$, $C_y$, and $C_z$ for the resistor compound. This is done by performing three strain versus output tests on a resistor and then solving the three output equations simultaneously. This was done on a particular resistor compound ("Birox" 1441) manufactured by Dupont and the following coefficients were found: $C_x = 25.3$; $C_y = 23.5$; and $C_z = 11.5$.

For a diaphragm designed for measuring 51.7 MPa (7500 lbf/in$^2$ or PSI) using the configuration of Figure 7, where the pressure to be measured is not applied to the thick film resistor, the relative output is 4. For the same diaphragm and thick film resistor material, but using the configuration of Figure 6, where the pressure to be measured is applied to the thick film resistor, the relative output is 12.5.

The normal direction sensitivity of the thick film resistor has been found to be linear and repeatable with no hysteresis. The present arrangement thus allows for a highly accurate, low noise, and low stress (sturdy) pressure transducer.

In general, the resistor compound has a dielectric component and a conductive component. The dielectric component may comprise a borosilicate, lead borosilicate, aluminosilicate or a lead silicate type of glass with possibly small additions of oxide, such as CdO, $Ca_2O_3$ or $Al_2O_3$. The conductive component may be a noble metal (Ag, Au, Pd) or an oxide or mixture thereof, or a conductive oxide of a noble metal.

By using a lower resistivity and larger size thick film resistor, embodiments of the invention can be used to reduce burst noise in ceramic-thick film pressure transducers. Tests of the currently available ceramic-thick film pressure transducers with bridge resistances of approximately 5000 ohms have shown noise levels of up to 0.15% of full scale output. Thick film resistors of lower resistivity, larger size, and 5000 ohms resistance, such as those that can be used in embodiments of the invention, have been tested and found to have noise levels of 0.025% of full scale output.

By increasing the output of the thick film resistor, and by taking advantage of its normal direction sensitivity, lower diaphragm stresses are necessary. This increases the factor of safety of the transducer for over-pressure protection. For example, consider a ceramic diaphragm designed to measure 51.7 MPa (7500 lbf/in$^2$ or PSI) using thick film resistors. To obtain an output equal to that obtained by a previously proposed transducer with a full Wheatstone bridge and a 2.54 mm (0.100 inch) thick diaphragm, the present invention can use a diaphragm which is 3.81 mm (0.150 inch) thick. This makes the diaphragm stronger to protect against failure in the event of an over-pressure.

If lower power consumption is required, the thick film resistivity could be increased at some cost in greater noise, while maintaining the maximum diaphragm stress and output at the same level.

Figure 8 shows a second embodiment of the invention, wherein a diaphragm 12 carries an annular thick film resistor 22 near the outer diameter of the diaphragm. This resistor is also connected to a circuit (not shown) for measuring changes in resistance. The result is a somewhat lower output since the radial and tangential strains are of opposite signs. This configuration, however, allows for a very long and narrow resistor. The output for a thick film resistor oriented radially or tangentially at any point on a flat diaphragm is shown in Figure 9. The total output is the average of the values for the above equation over the area of the resistor. The invention takes advantage of the thick film resistor's ability to sense strain in any direction. The outer gauges which would be oriented to measure radial strain in previously proposed pressure transducers are oriented to measure the tangential strain along the resistor axis and the radial strain perpendicular to the resistor axis (see Figure 10). The resistors are shaped to form annular areas at the outer edge of the diaphragm. This results in a resistance change dR/R for a long annular resistor similar to the resistance change dR/R for a short resistor oriented to measure radial strain and therefore a bridge output similar to that for the previously proposed pressure transducers. This orientation allows for longer, higher resistance, lower resistivity, and less noisy resistors than in the previous configurations.

Knowing that the thick film resistor is sensitive to the strains parallel and perpendicular to the resistor axis means that other resistor configurations can be chosen based on the resistance change dR/R desired from Figure 9. A Wheatstone bridge using resistors of any configuration could be made. With the object of maximising the output, the resistors should be located at diaphragm locations with the maximum average absolute resistance change dR/R value at the centre and at the outer edge. Other orientations for long, narrow resistors that have a resistance change dR/R of the proper magnitude and sign to give outputs similar to the previous proposals include the configurations of Figures 11 and 12. Other configurations could be found by choosing the desired resistance change dR/R for the same leg of the Wheatstone bridge and going to Figure 9 and finding the appropriate radius and resistor direction, remembering that the resistor will average the resistance change dR/R over the area of the resistor.

Figure 10 shows a flat diaphragm 14 carrying outer and inner thick film resistors 24 and 34 which are all oriented in substantially the same direction, in spite of the annular form of the outer film resistors 24.

Figure 11 shows an embodiment with inner annular film resistors 36 and outer C-shaped film resistors 26 on a diaphragm 16.

Figure 12 shows an embodiment with inner U-shaped film resistors 38 and outer annular and U-shaped film resistors 28 on a diaphragm 18.

**Claims**

1. A pressure transducer comprising:
   a diaphragm (10; 12; 14; 16; 18) having opposed surfaces;
   at least one thick film resistor (20; 22; 24, 34; 26, 36; 28, 38) on one of said diaphragm surfaces, the thick film resistor (20) having known resistivity coefficients for strains in longitudinal, transverse and normal directions with respect to the thick film resistor (20); and
   means (30) for measuring a change in the resistance of said at least one thick film resistor upon the application of pressure to the diaphragm;
   characterised in that:
   the thick film resistor (20) is elongate and has a known resistivity coefficient in the normal direction thereof;
   the at least one thick film resistor (20) has a surface area directly exposed to the pressure to be measured; and
   the change in the total resistance of the at least one thick film resistor (20; 22; 24, 34; 26, 36; 28, 38) is related to said strains and to said known resistivity coefficients by the formula

   $$\frac{dR}{R} = C_x\, e_x + C_y\, e_y + C_z\, e_z + e_x - e_y - e_z$$

   where $C_x$, $C_y$ and $C_z$ are said resistivity coefficients, and $e_x$, $e_y$ and $e_z$ are said strains, in said longitudinal, transverse and normal directions.

2. A pressure transducer according to claim 1, wherein the strains in the longitudinal, transverse and normal directions with respect to the at least one thick film resistor (20; 22; 24, 34; 26, 36; 28, 38) are related to said pressure by the equations

   $$e_x = \frac{1}{E_s}\left[\frac{3P}{8h^2}\left((1 - \nu^2)\, a^2 + (3\nu^2 - 3)\, x^2\right) - \nu P\right]$$

   $$e_y = \frac{1}{E_s}\left[\frac{3P}{8h^2}\left((1 - \nu^2)\, a^2 + (\nu^2 - 1)\, x^2\right) - \nu P\right]$$

   $$e_z = \frac{1}{E_r}\left[P - \nu'\left(\frac{3P}{8h^2}\left((1 + \nu')\, 2a^2 - (1 + \nu')\, 4\, x^2\right)\right)\right]$$

   where P is said pressure, $\nu$ and $\nu'$ are the Poisson's ratios of the diaphragm and resistor, a is the diaphragm radius, $E_r$ and $E_s$ are the Young's moduli of the resistor and the diaphragm, h is the diaphragm thickness, and x is the radius at which the resistor is located.

3. A pressure transducer according to claim 1 or claim 2, wherein the diaphragm (12) is circular and wherein the at least one thick film resistor (22) has an annular shape and is disposed adjacent to the circumference of the diaphragm (12).

4. A pressure transducer according to claim 1 or claim 2, wherein:
   the diaphragm (14; 18) is circular;
   a pair of thick film resistors (34; 38) are disposed adjacent and parallel to each other near the centre of one of said diaphragm surfaces and having known resistivity coefficients for strains in longitudinal, transverse and normal directions with respect to the thick film resistors; and
   a pair of partly annular shaped thick film resistors (24; 28) are disposed on opposite sides of said one diaphragm surface adjacent to the circumference and having known resistivity coefficients for strains in longitudinal, transverse and normal directions with respect to the partly annular shaped thick film resistors.

5. A pressure transducer according to claim 4, wherein each resistor of the pair of thick film resistors (38) and of the pair of partly annular shaped thick film resistors (28) is U-shaped.

6. A pressure transducer according to claim 1 or claim 2, wherein:
the diaphragm (16) is circular;
a pair of partly annular shaped thick film resistors (36) are disposed on one of said surfaces near a central area of the diaphragm (16) and having known resistivity coefficients for strains in longitudinal, transverse and normal directions with respect to the partly annular shaped thick film resistors (36); and
a pair of C-shaped thick film resistors (26) are disposed on opposite sides of said one diaphragm surface adjacent to the circumference and having known resistivity coefficients for strains in longitudinal, transverse and normal directions with respect to the C-shaped thick film resistors.

7. A method of measuring pressure utilising a diaphragm (10; 12; 14; 16; 18) carrying at least one thick film resistor (20; 22; 24; 34; 26; 36; 28; 38), the method comprising the steps of:
orienting the diaphragm so that the pressure is applied normal to the at least one thick film resistor; and
measuring (30) any change in resistance of the at least one thick film resistor due to the applied pressure;
characterised in that:
the thick film resistor (20) is elongate;
the at least one thick film resistor (20) has a surface area directly exposed to the pressure to be measured; and
the change in resistance (dR/R) of the at least one thick film resistor has the relationship:

$$\frac{dR}{R} = C_x \, e_x + C_y \, e_y + C_z \, e_z + e_x - e_y - e_z$$

where $C_x$, $C_y$ and $C_z$ are resistivity coefficients for strains in the longitudinal, transverse and normal directions to the resistor and $e_x$, $e_y$ and $e_z$ are strains in the longitudinal, transverse and normal directions to the resistor.

8. A method according to claim 7, wherein the strains in the longitudinal, transverse and normal directions are related to said pressure by the equations:

$$e_x = \frac{1}{E_s} \left[ \frac{3P}{8h^2} \left( (1 - \nu^2) \, a^2 + (3\nu^2 - 3) \, x^2 \right) - \nu P \right]$$

$$e_y = \frac{1}{E_s} \left[ \frac{3P}{8h^2} \left( (1 - \nu^2) \, a^2 + (\nu^2 - 1) \, x^2 \right) - \nu P \right]$$

$$e_z = \frac{1}{E_r} \left[ P - \nu' \left( \frac{3P}{8h^2} \left( (1 + \nu') \, 2a^2 - (1 + \nu') \, 4 \, x^2 \right) \right) \right]$$

where $e_x$, $e_y$, and $e_z$ are the radial, tangential and normal strains, P is the applied pressure, $\nu$ and $\nu'$ are the Poisson's ratios of the diaphragm and resistor, a is the diaphragm radius, $E_r$ and $E_s$ are the Young's moduli of the resistor and the diaphragm, h is the diaphragm thickness, and x is the radius at which the resistor is located.

**Patentansprüche**

1. Druckwandler mit:
   einer Membran (10; 12; 14; 16; 18) mit einander gegenüberliegenden Oberflächen;
   mindestens einem Dickschichtwiderstand (20; 22; 24, 34; 26, 36; 28, 38) auf einer der erwähnten Membranoberflächen, wobei der Dickschichtwiderstand (20) bekannte Widerstandskoeffizienten für Spannungen bzw. Verformungen in longitudinaler, transversaler und senkrechter Richtung bezüglich des Dickschichtwiderstandes (20) aufweist; und
   Einrichtungen (30) zur Messung einer Änderung des Widerstands des zumindest einen erwähnten Dickschichtwiderstandes bei der Ausübung von Druck auf die Membran;
   gekennzeichnet dadurch, daß:
   der Dickschichtwiderstand (20) länglich ist und in einer zu ihm senkrechten Richtung einen bekannten Widerstandskoeffizienten hat;
   der zumindest eine Dickschichtwiderstand (20) eine Oberfläche hat, die direkt dem zu messenden Druck ausgesetzt ist; und
   die Änderung im Gesamtwiderstand dieses zumindest einen Dickschichtwiderstandes (20; 22; 24, 34; 26, 36; 28, 38) durch folgende Formel mit den erwähnten Verformungen und den erwähnten bekannten Widerstandskoeffizienten verknüpft ist:

   $$dR/R = C_x e_x + C_y e_y + C_z e_z + e_x - e_y - e_z \,,$$

   wobei $C_x$, $C_y$ und $C_z$ die erwähnten Widerstandskoeffizienten sind, und ex, ey und $e_z$ die erwähnten Verformungen sind, in den erwähnten longitudinalen, transversalen und senkrechten Richtungen.

2. Druckwandler nach Anspruch 1, bei dem die Verformungen in den longitudinalen, transversalen und senkrechten Richtungen bezüglich dieses mindestens einen Dickschichtwiderstandes (20; 22; 24, 34; 26, 36; 28, 38) durch folgende Formeln mit dem Druck verknüpft sind:

   $$e_x = 1/E_s \, [3P/8h^2 \, ((1 - \nu^2) \, a^2 + (3\nu^2 - 3)x^2) - \nu P],$$
   $$e_y = 1/E_s \, [3P/8h^2 \, ((1 - \nu^2) \, a^2 + (\nu^2 - 1)x^2) - \nu P],$$
   $$e_z = 1/E_r \, [P - \nu'(3P/8h^2 \, ((1 + \nu')2a^2 - (1 + \nu')4x^2))],$$

   wobei P der ausgeübte Druck ist, $\nu$ und $\nu'$ die jeweiligen Poissonschen Konstanten von Membran und Widerstand sind, a der Membrandurchmesser ist, $E_r$ und $E_s$ die jeweiligen Elastizitätsmoduli des Widerstands und der Membran sind, h die Membrandicke ist und x der Radius, bei dem der Widerstand angebracht ist.

3. Druckwandler nach Anspruch 1 oder 2, bei dem die Membran (12) kreisförmig ist und bei dem der zumindest eine Dickschichtwiderstand (22) eine ringförmige Gestalt hat und nahe dem äußeren Umfang der Membran (12) angebracht ist,

4. Druckwandler nach Anspruch 1 oder 2, bei dem die Membran (14; 18) kreisförmig ist; ein Paar Dickschichtwiderstände (34; 38) benachbart und parallel zueinander nahe dem Zentrum einer der Membranoberflächen angebracht ist und bekannte Widerstandskoeffizienten für Verformungen in longitudinalen, transversalen und senkrechten Richtungen bezüglich des Dickschichtwiderstandes hat und ein Paar teilweise ringförmiger Dickschichtwiderstände (24; 28) auf gegenüberliegenden Seite der einen Membranoberflächen nahe des äußeren Umfanges angebracht ist und bekannte Widerstandskoeffizienten für Verformungen in longitudinalen, transversalen und senkrechten Richtungen bezüglich des teilweise ringförmigen Dickschichtwiderstandes hat.

5. Druckwandler nach Anspruch 4 bei dem der Widerstand des Dickschichtwiderstandpaares (38) und des Paares der teilweise ringförmigen Dickschichtwiderstände (28) U-förmig ist,

6. Druckwandler nach Anspruch 1 oder 2, bei dem die Membran (16) kreisförmig ist, ein Paar teilweise ringförmiger Dickschichtwiderstände (36) auf einer der Oberflächen nahe eines zentralen Ortes der Membran (16) angebracht ist und bekannte Widerstandskoeffizienten für Verformungen in longitudinalen, transveralen und senkrechten Richtungen bezüglich des teilweise ringförmigen Dickschichtwiderstandes (36) hat, und ein Paar C-förmiger Dickschichtwiderstände (26) auf einander gegenüberliegenden Seiten der einen Membranoberfläche angebracht ist und bekannte Widerstandskoeffizienten für Verformungen in longitudinalen, transversalen und senkrechten Richtungen bezüglich des C-förmigen Dickschichtwiderstandes hat.

7. Verfahren zur Druckmessung, bei dem eine Membran (10; 12; 14; 16; 18), die mindestens einen Dickschichtwiderstand (20; 22; 24, 34; 26, 36; 28, 38) trägt, verwendet wird und wobei das Verfahren aus folgenden Schritten besteht:

Ausrichtung der Membran so, daß der ausgeübte Druck senkrecht zu diesem mindesten einen Dickschichtwiderstand ist; und Messung (30) jeglicher, durch den ausgeübten Druck hervorgerufenen Widerstandsänderung dieses mindestens einen Dickschichtwiderstandes; dadurch gekennzeichnet, daß: der Dickschichtwiderstand (20) länglich ist; der mindestens eine Dickschichtwiderstand (20) eine Oberfläche hat, die direkt dem zu messenden Druck ausgesetzt ist; und die Widerstandsänderung (dR/R) des mindestens einen Dickschichtwiderstandes folgender Beziehung genügt:

$$dR/R = C_x e_x + C_y e_y + C_z e_z + e_x - e_y - e_z ,$$

wobei $C_x$, $C_y$ und $C_z$ die Widerstandskoeffizienten für Verformungen in den longitudinalen, transversalen und senkrechten Richtungen zum Widerstand sind, und $e_x$, $e_y$ und $e_z$ die Verformungen in den longitudinaien, transversalen und senkrechten Richtungen zum Widerstand sind.

8. Verfahren nach Anspruch 7, bei dem die Verformungen in den longitudinalen, transversalen und senkrechten Richtungen mit dem Druck durch folgende Gleichungen verknüpft sind:

$$e_x = 1/E_s [3P/8h^2 ((1 - \nu^2) a^2 + (3\nu^2 - 3)x^2 - \nu P]$$
$$e_y = 1/E_s [3P/8h^2 ((1 - \nu^2) a^2 + (1\nu^2 - 1)x^2 - P]$$
$$e_z = 1/E_r [P - \nu'(3P/8h^2 ((1 + \nu')2a^2 - (1 + \nu')4x^2))]$$

wobei $e_x$, ey, $e_z$ die radialen, tangentialen und senkrechten Verformungen sind, P der ausgeübte Druck ist, $\nu$ und $\nu'$ die jeweiligen Poissonschen Konstanten von Substrat und Widerstand sind, a der Membrandurchmesser ist, $E_r$ und $E_s$ die jeweiligen Elastizitätsmoduli des Widerstands und des Substrats sind, h die Membrandicke ist und x der Radius, bei dem der Widerstand angebracht ist.

## Revendications

1. Transducteur de pression comprenant :

un diaphragme (10 ; 12 ; 14 ; 16 ; 18) comportant des faces opposées ;

au moins une résistance à couche épaisse (20 ; 22 ; 24, 34 ; 26, 36 ; 28, 38) sur l'une desdites faces de diaphragme, la résistance à couche épaisse (20) ayant des coefficients de résistivité connus pour des efforts dans les directions longitudinale, transversale et normale par rapport à la résistance à couche épaisse (20) ; et,

un moyen (30) pour mesurer une variation de la valeur de résistance de ladite au moins une résistance à couche épaisse lors de l'application d'une pression au diaphragme ;

caractérisé en ce que :

la résistance à couche épaisse (20) est allongée et possède un coefficient de résistivité connu dans sa direction normale ;

ladite au moins une résistance à couche épaisse (20) présente une certaine superficie de face directement exposée à la pression à mesurer ; et,

la variation de la valeur de résistance totale de ladite au moins une résistance à couche épaisse (20 ; 22 ; 24, 34 ; 26, 36 ; 28, 38) est liée auxdits efforts et auxdits coefficients de résistivité connus par la formule

$$\frac{dR}{R} = C_x e_x + C_y e_y + C_z e_z + e_x - e_y - e_z$$

où $C_x$, $C_y$ et $C_z$ sont lesdits coefficients de résistivité, et $e_x$, $e_y$ et $e_z$ sont lesdits efforts, dans lesdites directions longitudinale, transversale et normale.

2. Transducteur de pression selon la revendication 1, dans lequel les efforts dans les directions longitudinale, transversale et normale par rapport à ladite au moins une résistance à couche épaisse

EP 0 320 299 B1

(20 ; 22 ; 24, 34 ; 26, 36 ; 28, 38) sont liés à ladite pression par les équations :

$$e_x = \frac{1}{E_s} \left[ \frac{3P}{8h^2} ((1 - v^2) a^2 + (3v^2 - 3) x^2) - vP \right]$$

$$e_y = \frac{1}{E_s} \left[ \frac{3P}{8h^2} ((1 - v^2) a^2 + (v^2 - 1) x^2) - vP \right]$$

$$e_z = \frac{1}{E_r} \left[ P - v'( \frac{3P}{8h^2} ((1 + v') 2a^2 - (1 + v') 4 x^2)) \right]$$

où P est ladite pression, $v$ et $v'$ sont les coefficients de Poisson du diaphragme et de la résistance, a est le rayon de diaphragme, $E_r$ et $E_s$ sont les modules de Young de la résistance et du diaphragme, h est l'épaisseur de diaphragme, et x est le rayon auquel la résistance est située.

3. Transducteur de pression selon la revendication 1 ou la revendication 2, dans lequel le diaphragme (12) est circulaire et dans lequel ladite au moins une résistance à couche épaisse (22) a une forme annulaire et est disposée adjacente à la circonférence du diaphragme (12).

4. Transducteur de pression selon la revendication 1 ou la revendication 2, dans lequel :
le diaphragme (14 ; 18) est circulaire ;
deux résistances à couche épaisse (34 ; 38) sont disposées adjacentes et parallèles l'une à l'autre près du centre de l'une desdites faces de diaphragme et ont des coefficients de résistivité connus pour des efforts dans les directions longitudinale, transversale et normale par rapport aux résistances à couche épaisse ; et,
deux résistances à couche épaisse de forme partiellement annulaire (24 ; 28) sont disposées de chaque côté de ladite une face de diaphragme adjacentes à la circonférence et ont des coefficients de résistivité connus pour des efforts dans les directions longitudinale, transversale et normale par rapport aux résistances à couche épaisse de forme partiellement annulaire.

5. Transducteur de pression selon la revendication 4, dans lequel chacune des deux résistances à couche épaisse (38) et chacune des deux résistances à couche épaisse de forme partiellement annulaire (28) est en forme de U.

6. Transducteur de pression selon la revendication 1 ou la revendication 2, dans lequel :
le diaphragme (16) est circulaire ;
deux résistances à couche épaisse de forme partiellement annulaire (36) sont disposées sur l'une desdites faces près d'une zone centrale du diaphragme (16) et ont des coefficients de résistivité connus pour des efforts dans les directions longitudinale, transversale et normale par rapport aux résistances à couche épaisse de forme partiellement annulaire (36) ; et,
deux résistances à couche épaisse en forme de C (26) sont disposées de chaque côté de ladite une face de diaphragme adjacentes à la circonférence et ont des coefficients de résistivité connus pour des efforts dans les directions longitudinale, transversale et normale par rapport aux résistances à couche épaisse en forme de C.

7. Procédé de mesure de pression utilisant un diaphragme (10 ; 12 ; 14 ; 16 ; 18) portant au moins une résistance à couche épaisse (20 ; 22 ; 24, 34 ; 26, 36 ; 28, 38), le procédé comprenant les étapes :
d'orientation du diaphragme de sorte que la pression soit appliquée perpendiculairement à ladite au moins une résistance à couche épaisse ; et,
de mesure (30) de toute variation de valeur de résistance de ladite au moins une résistance à couche épaisse due à la pression appliquée ;
caractérisé en ce que :
la résistance à couche épaisse (20) est allongée ;
ladite au moins une résistance à couche épaisse (20) présente une certaine superficie de face directement exposée à la pression à mesurer ; et,

la variation de la valeur de résistance (dR/R) totale de ladite au moins une résistance à couche épaisse est donnée par la relation :

$$\frac{dR}{R} = C_x\, e_x\; +\; C_y\, e_y\; +\; C_z\, e_z\; +\; e_x \cdot e_y \cdot e_z$$

où $C_x$, $C_y$ et $C_z$ sont des coefficients de résistivité pour des efforts dans les directions longitudinale, transversale et normale par rapport à la résistance et $e_x$, $e_y$ et $e_z$ sont des efforts, dans lesdites directions longitudinale, transversale et normale par rapport à la résistance.

8. Transducteur de pression selon la revendication 7, dans lequel les efforts dans les directions longitudinale, transversale et normale sont liés à ladite pression par les équations :

$$e_x = \frac{1}{E_s}\; [\; \frac{3P}{8h^2}\; ((1 - v^2)\; a^2 + (3v^2 - 3)\; x^2)\; -\; vP]$$

$$e_y = \frac{1}{E_s}\; [\; \frac{3P}{8h^2}\; ((1 - v^2)\; a^2 + (v^2 - 1)\; x^2)\; -\; vP]$$

$$e_z = \frac{1}{E_r}\; [P - v'(\; \frac{3P}{8h^2}\; ((1 + v')\; 2a^2 - (1 + v')\; 4\; x^2))]$$

où $e_x$, $e_y$, et $e_z$ sont les efforts radiaux, tangentiels et normaux, P est la pression appliquée, $v$ et $v'$ sont les coefficients de Poisson du diaphragme et de la résistance, a est le rayon de diaphragme, $E_r$ et $E_s$ sont les modules de Young de la résistance et du diaphragme, h est l'épaisseur de diaphragme, et x est le rayon auquel la résistance est située.

FIG. 1

FIG. 2

FIG. 3

FIG. 4

FIG. 5

FIG. 6

FIG. 7

FIG. 8

## FIG. 9
dR/R for a Thick Film Resistor
Oriented Radially or Tangentially

EP 0 320 299 B1

FIG. 10

FIG. 11

FIG. 12